# EUROPÄISCHE PATENTSCHRIFT

(11) **EP 1 712 452 B1**
(45) Veröffentlichungstag und Bekanntmachung des Hinweises auf die Patenterteilung: **25.03.2009**
(21) Anmeldenummer: 06007648.6
(22) Anmeldetag: 12.04.2006
(51) Int. Cl.: B62D 25/04

(54) **Fahrgastzelle für Personenkraftwagen**
Passenger compartment for a motor car
Compartiment passager pour voiture

(30) Priorität: 13.04.2005 DE 102005016993
(43) Veröffentlichungstag der Anmeldung: 18.10.2006
(73) Patentinhaber: GM Global Technology Operations, Inc., Detroit, MI 48265-3000 (US)
(72) Erfinder: Haase, Martin, 55126 Mainz (DE); Heim, Gunther, 64367 Mühltal (AT); Lessmeister, Roland, 67697 Otterberg (DE); Mildner, Udo, 65550 Limburg (DE); Ringel, Franz-Josef, 55129 Mainz (DE); Schmoll, Ralf, 65428 Rüsselsheim (DE); Stern, Andreas, 56581 Ehlscheid (DE)
(74) Vertreter: Strauss, Peter

(56) Entgegenhaltungen:
- EP-A- 1 172 281
- WO-A-03/000441
- DE-A1- 10 125 985
- DE-A1- 10 228 974
- DE-C- 19 854 076
- FR-A1- 2 816 573

## Beschreibung

Die Erfindung liegt auf dem Gebiet des Personenkraftwagen-Karosseriebaus und betrifft eine Fahrgastzelle für Personenkraftwagen nach dem Oberbegriff des Patentanspruchs 1.

Bei Fahrgastzellen ist die an sich bekannte (DE 195 06 160 A1) so genannte A-Säule - also der Träger der Fahrgastzelle, der üblicherweise mit einem frontseitigen Abschnitt eine seitliche Begrenzung und Aufnahme der Windschutzscheibe bildet und sich mit einem heckseitigen Abschnitt bis zum so genannten vorderen Dachknoten der Fahrgastzelle erstreckt - hinsichtlich verschiedener, oft gegenläufiger Anforderungen zu optimieren. Einerseits muss die A-Säule eine ausreichende Festigkeit und Steifigkeit aufweisen, um die betriebsgemäß auftretenden Kräfte und Spannungen der Karosserie aufzunehmen. Insbesondere bei Beschleunigungen und vor allem bei Unfällen wirken auf die A-Säule erhebliche, zum Teil nicht exakt vorausberechenbare Kräfte. Andererseits sollte die A-Säule trotz hoher Steifigkeit und Festigkeit gewichtsoptimiert ausgebildet sein.

Die EP 1 172 281 A1 offenbart eine Fahrgastzelle für Personenkraftwagen der eingangs genannten Art mit einer ein hydrogeformtes Profil aufweisenden Verstrebung für die A-Säule, die sich seitlich der Windschutzscheibe bis zu einem mittleren Bereich der Fahrzeugseite zwischen einem vorderen Dachknoten und einem mittleren Dachknoten einer B-Säule erstreckt, wobei das hydrogeformte Profil verlängerte Seitenwände aufweist, die als integrale schweißbare Verbindungselemente zur Schweißverbindung mit weiteren Karosserieteilen dienen.

Die internationale Patentanmeldung WO 03/000441 A zeigt eine Fahrgastzelle nach dem Oberbegriff von Patentanspruch 1.

Der vorliegenden Erfindung liegt nun die Aufgabe zugrunde, eine Fahrgastzelle der eingangs genannten Art so weiterzubilden, dass unter Erhalt ihrer hohen Festigkeit und Steifigkeit die A-Säule bei geringem Querschnitt fertigungstechnisch einfach und kostengünstig mit weiteren Karosserieteilen verbunden werden kann.

Erfindungsgemäß wird diese Aufgabe durch eine Fahrgastzelle mit den Merkmalen des Patentanspruchs 1 gelöst.

Demgemäß weist das hydrogeformte Profil eine Aufnahme auf, in der ein Montage-Flansch formschlüssig gehalten ist, wobei der Flansch mehrere Öffnungen aufweist, die von dem Material des hydrogeformten Profils durchdrungen sind. Herstellungstechnisch bevorzugt sind die Öffnungen in einer Reihe angeordnet.

Dadurch kann die Verstrebung im Bereich der A-Säule sowohl einerseits hinsichtlich ihrer Festigkeit bei geringem Gewicht und andererseits hinsichtlich ihrer Schweißbarkeit optimiert werden und zwar bei unabhängiger Optimierbarkeit dieser beiden Anforderungen. Mit anderen Worten: Für den festigkeitsrelevanten Bereich und den designrelevanten Bereich der A-Säule kann ein hochfestes, leichtes Material wie zum Beispiel Aluminium verwendet werden. Die für die Verschweißung vorgesehenen Bereiche der A-Säule können je nach Anforderungen optimiert sein.

Vorteilhafterweise kann so der Flansch aus einem anderen Material als das übrige Profil bestehen. Die Materialien können damit je nach Anforderung individuell optimiert sein. So kann der Flansch aus einem besonders gut fügbaren (zum Beispiel punktschweißbaren) Werkstoff (zum Beispiel Stahl) und das übrige Profil aus einem besonders festen und leichten Werkstoff (zum Beispiel Aluminium) bestehen.

Vorteilhafte Ausgestaltungen und Weiterbildungen der Erfindung sind den Unteransprüchen sowie der Beschreibung unter Bezugnahme auf die Zeichnung entnehmbar.

Gemäß einer ersten vorteilhaften Ausgestaltung erstreckt sich die Verstrebung bis zum vorderen Dachknoten.

Gemäß einer zweiten, ebenfalls vorteilhaften Ausgestaltung erstreckt sich die Verstrebung bis zum mittleren Dachknoten.

Gemäß einer dritten Ausgestaltung erstreckt sich die Verstrebung bis zu einem Bereich zwischen dem vorderen Dachknoten und dem mittleren Dachknoten.

Eine bevorzugte Ausgestaltung der integralen schweißbaren Verbindungselemente besteht darin, dass die Verstrebung bzw. die A-Säule stranggepresst ist, indem ein Blechstreifen mit überlappenden Rändern vorgeformt wird, die in Parallellage miteinander verbunden sind, und wobei zumindest ein Randstreifen zumindest abschnittsweise Materialausnehmungen zur Bildung von Fügestellen aufweist. Damit sind Fügestellen nur einfacher Materialstärke des Randstreifens gebildet, die eine verbesserte Schweißbarkeit aufweisen.

Als integrale schweißbare Verbindungselemente kann die Verstrebung bzw. die A-Säule nach einer bevorzugten Ausgestaltung der Erfindung zusätzlich oder alternativ zu den vorgenannten Verbindungselementen ein Verbindungsblech aufweisen, das einen inneren Abschnitt der Fahrgastzellenseitenwand bildet und mit einer äußeren Seitenwand der Fahrgastzelle verbunden ist.

Außerdem kann die Verstrebung bzw. die A-Säule ein im Wesentlichen L-förmiges Strukturteil aufweisen, das mit einer frontseitigen Radeinbaustrebe verbunden ist und als integralen Abschnitt einen hinteren Teil der Radeinbaustrebe aufweist. Das L-förmige Strukturteil bildet vorzugsweise ein Schließprofil der Verstrebung bzw. der A-Säule.

Die Verstrebung bzw. die A-Säule kann außerdem ein Knotenblech aufweisen zur Verbindung mit einer Strebe eines Dachrahmen. Diese Ausgestaltungen der erfindungsgemäßen Fahrgastzelle sind besonders deshalb vorteilhaft, weil mit ihnen bei verbesserter Sicht aufgrund eines verminderten A-Säulen-Querschnitts die Anbindung an weitere Karosserieteile besonders einfach und fertigungstechnisch flexibel realisiert werden kann. So können die Verbindungsteile mit der Verstrebung bzw. der A-Säule durch Punkt-, Laser oder CO2-Schweißen verbunden sein. Vorteilhafterweise kann eine aus den vorstehend genannten Blechen und der A-Säule gebildete vorgefertigte Baugruppe sowohl beim Zusammenbau der Frontpartie als auch bei der inneren Seitenwand-Montage mit den korrespondierenden Karosserieteilen gefügt werden.

Fertigungstechnisch ist es vorteilhaft, wenn das frontseitige Ende der Verstrebung bzw. der A-Säule abgeschrägt ist und/oder das dachknotenseitige Ende eine Ausnehmung aufweist.

Die Oberfläche der Verstrebung bzw. der A-Säule kann so behandelt sein, dass darauf eine Lackierung zum Beispiel in Wagenfarbe aufgebracht werden kann. Im Hinblick auf die dafür erforderlichen, kostensteigernden zusätzlichen Prozesse sieht eine vorteilhafte Ausgestaltung der Erfindung vor, dass die Verstrebung bzw. die A-Säule mit einer äußeren Blende versehen ist. Damit kann eine wesentlich geringere Oberflächengüte der Verstrebung bzw. der A-Säule in diesem Bereich akzeptiert werden.

Ein derzeitiger Trend im Fahrzeugdesign - vor allem bei Vans oder Mini-Vans geht dahin, im vorderen Bereich der Fahrgastzelle seitlich eine kleine Dreiecksscheibe vorzusehen. Diesbezüglich sieht eine vorteilhafte Ausgestaltung der Erfindung vor, dass von der Verstrebung bzw. der A-Säule ein sich frontseitig erstreckender Seitenholm abzweigt, der einen im Wesentlichen dreiecksförmigen Rahmen für eine Seitenscheibe begrenzt.

Konstruktiv und fertigungstechnisch bevorzugt kann dabei das frontseitige Ende der Verstrebung bzw. der A-Säule mit dem frontseitigen Ende des Seitenholms über ein angeschweißtes Seitenwandteil verbunden sein.

Herstellungstechnisch bevorzugt weist die Seitenscheibe eine Blende zur äußeren Verblendung der Verstrebung bzw. der A-Säule auf. Damit wird mit einem einzigen Bauteil und mithin nur einem Montageschritt neben dem erwünschten Design auch die Verblendung der A-Säule realisiert. Bevorzugt besteht die Seitenscheibe aus Kunststoff, was eine zusätzliche Gewichtsreduzierung ermöglicht.

Ausführungsbeispiele der Erfindung werden nachfolgend anhand der schematischen Figuren der Zeichnung näher erläutert. Es zeigen dabei:
- Fig. 1: eine erste Fahrgastzelle in Seitenansicht,
- Fig. 2: eine A-Säule aus Fig. 1 in Seitenansicht und in Querschnittsdarstellungen,

- Fig. 3a - 3e: Montagestadien der Fahrgastzelle nach Fig. 1,
- Fig. 4: eine Seitenscheibe,
- Fig. 5: ein hydrogeformtes Profil mit einem Flansch,
- Fig. 6: einen Flansch,
- Fig. 7a, 7b: ein weiteres Profil mit dem Flansch nach Fig. 6 vor und nach dem Hydroformen,
- Fig. 8: einen Ausschnitt aus einer weiteren Fahrgastzelle in Seitenansicht,
- Fig. 9: einen Schnitt in der Ebene A-A der Fig. 8 und
- Fig. 10: einen Schnitt in der Ebene B-B der Fig. 8.

In den Figuren der Zeichnung sind gleiche und funktionsgleiche Elemente und Merkmale - sofern nichts anderes angegeben ist - mit denselben Bezugszeichen versehen worden.

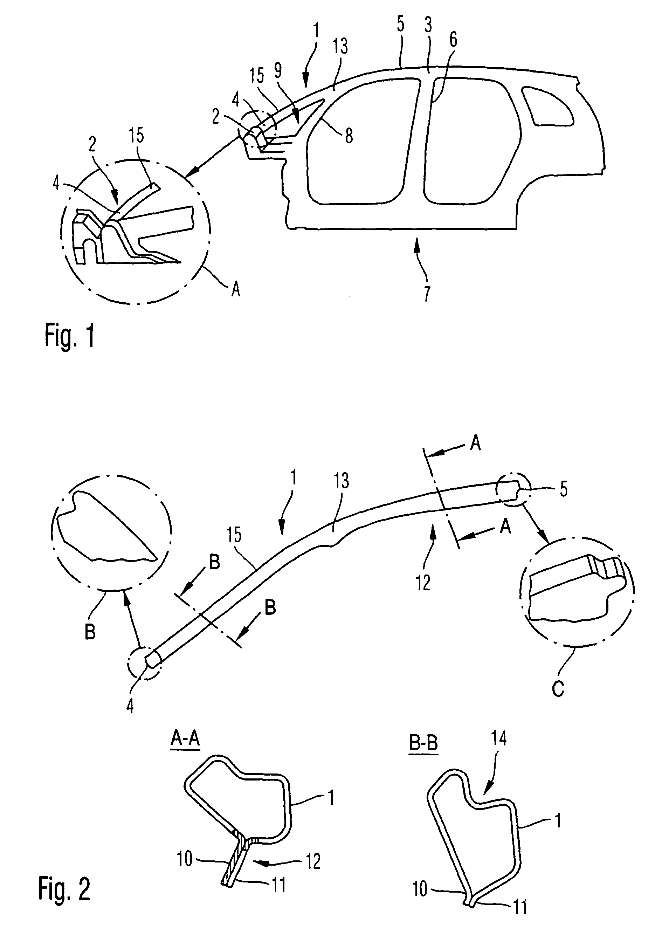

Fig. 1 zeigt in einer Seitenansicht eine Personenkraftwagen(PKW)-Fahrgastzelle mit einer Verstrebung 1 im vorderen Bereich, die sich von einem äußeren vorderen Seitenwandteil 2 über die A-Säule und den vorderen Dachknoten 13 erstreckt und bis zu einem mittleren Dachknoten 3 reichen kann. Der vordere Dachknoten 13 bezeichnet das dachseitige Ende der A-Säule 15, bis zu der die Windschutzscheibe reicht. Der mittlere Dachknoten 3 bezeichnet das dachseitige Ende der B-Säule 6, bis zu der also die seitlichen Scheiben reichen. Die A-Säule 15 ist hier Bestandteil der Verstrebung 1. Die Verbindung des frontseitigen Endes 4 der Verstrebung 1 mit dem Seitenwandteil 2 ist in der Detaildarstellung A vergrößert dargestellt. Diese Verbindung und die Verbindung des heckseitigen Endes 5 der Verstrebung 1 mit dem Dachbereich und einer mittleren Verstrebung 6 einer Fahrzeug-Seitenwand 7 unter Bildung des mittleren Dachknotens 3 erfolgt in an sich bekannter Weise durch Laser- und/oder Widerstandspunktschweißung. Die mittlere Verstrebung 6 wird auch als B-Säule bezeichnet. Etwa auf halber Länge der Verstrebung 1 zweigt im Beispiel in Fig. 1 eine weitere Strebe 8 ab, deren freies Ende sich bis zum Seitenwandteil 2 erstreckt. Diese Strebe 8 wird auch als A2-Säule 8 bezeichnet. Die A-Säule 15, die zur Differenzierung gegenüber der A2-Säule 8 nachfolgend auch als A1-Säule 15 bezeichnet wird, bildet mit der A2-Säule 8 und dem Seitenwandteil 2 einen etwa dreiecksförmigen Rahmen 9, in den wie nachfolgend noch beschrieben eine vordere Seitenscheibe einsetzbar ist.

Fig. 2 zeigt in gegenüber Fig. 1 vergrößerter Darstellung die Verstrebung 1. Man erkennt insbesondere unter Berücksichtigung der Detaildarstellungen B und C, dass das frontseitige Ende 4 der Verstrebung 1 zu Fügezwecken abgeschrägt ist und das heckseitige Ende 5 zur Verbindung mit der B-Säule 6 der Seitenwand eine Materialaussparung aufweist. Wie die Darstellung der Querschnitte entlang der Linien A-A und B-B zeigt, handelt es sich bei der Verstrebung 1 um ein Hohlprofil, das von einem hydrogeformten Rollprofil gebildet ist.

Das Hydroformen von Bauteilen ist an sich bekannt. So beschreibt die Internetseite
(www.iwu.fhg.de/umformfuegen/gebiete/umformfuegen/hydrove rfahren/hydroclinchen.html) des Fraunhofer-Instituts für Werkzeugmaschinen und Umformen (IWU) vom 21.05.2004 unter dem Stichwort Hydroclinchen eine solche Hydroformung. Dabei wird zum Verbinden von zwei oder mehr Bauteilen eine Materialverformung durch ein Fluidum bewirkt, das quasi als Stempel fungiert.

Das Profil-Halbzeug wird aus einem Materialstreifen geformt, wobei hochfestes, aber leichtes Material, wie zum Beispiel Aluminium, bevorzugt wird. Das Halbzeug hat noch nicht die endgültige, in den Schnittdarstellungen A-A und B-B erkennbare Kontur. Es ist aber bereits mit überlappenden Rändern 10, 11 versehen, die parallel aufeinander liegend dicht verbunden sind und bündig abschließen. Die Überlappung ist zum Ende 5 hin (also im Bereich des Querschnitts A-A) deutlich größer als zum frontnahen Ende 4 hin. Das Profil-Halbzeug wird im Hydroform-Prozess in seinem hohlen Innenraum mittels Fluid derart druckbeaufschlagt, dass sich seine Wände an eine vorgegebene (hier nicht gezeigte) äußere Werkzeug-Form anschmiegen. Damit wird das gewünschte, zum Beispiel in Fig. 2 dargestellte Rollprofil erhalten.

Die im frontfernen Bereich vorgesehene Überlappung ist abschnittsweise unterbrochen oder reduziert, wie im Querschnitt A-A erkennbar. Dort liegt nur eine einfache Wandstärke, also die Wandstärke nur eines Randstreifens 10 vor. In diesen Bereichen (Fügestellen) 12 weist das Profil durch die verminderte Stärke eine verbesserte Schweißbarkeit auf und ist deshalb besonders gut mit der in diesem Bereich parallel verlaufenden Dachstrebe der Seitenwand 7 (Fig. 1) verschweißbar.

Das Profil hat im frontseitigen Abschnitt einen längs verlaufenden Absatz 14, in den der Rand einer (nicht dargestellten) Windschutzscheibe einlegbar ist.

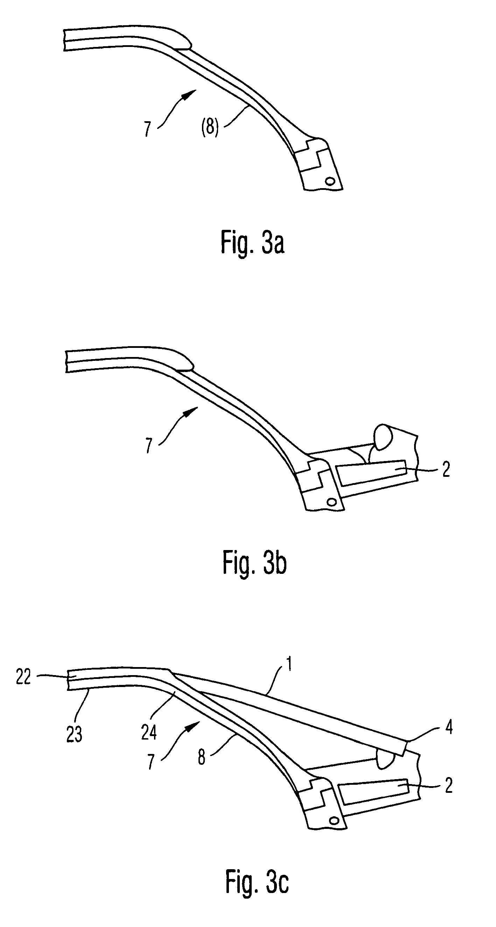

Die Fig. 3a - 3e zeigen Montagestadien der Fahrgastzelle nach Fig. 1 im Bereich der Verstrebung 1. Fig. 3a zeigt in einem ersten Stadium die äußere Seitenwand 7 mit einem Abschnitt, der die A2-Säule 8 bilden wird. An die Seitenwand 7 wird anschließend (Fig. 3b) das Seitenwandteil 2 mittels Punktschweißung angeschweißt. Fig. 3c zeigt ein Stadium, in dem das hydrogeformte Profil für die Verstrebung 1 mittels Schweißpunkten mit der Seitenwand 7 verbunden ist. Der rückwärtige Abschnitt 22 des Profils der Verstrebung 1 verläuft somit im Wesentlichen parallel mit dem entsprechenden Dach-Streben 23 der Seitenwand 7. Vom Verbindungsbereich am Abzweig 24 der A2-Säule 8 an bis zum Seitenwandteil 2 ist das Profil der Verstrebung 1 frei verlaufend und mit seinem Ende 4 mit dem Seitenwandteil 2 verschweißt. Dazu geeignete Schweißverfahren sind zum Beispiel MIG- oder Laserschweißen. Die zu diesen Schweißverbindungen erfindungsgemäß vorgesehenen besonderen Verbindungsbereiche oder Verbindungsabschnitte sind nachfolgend noch detailliert beschrieben.

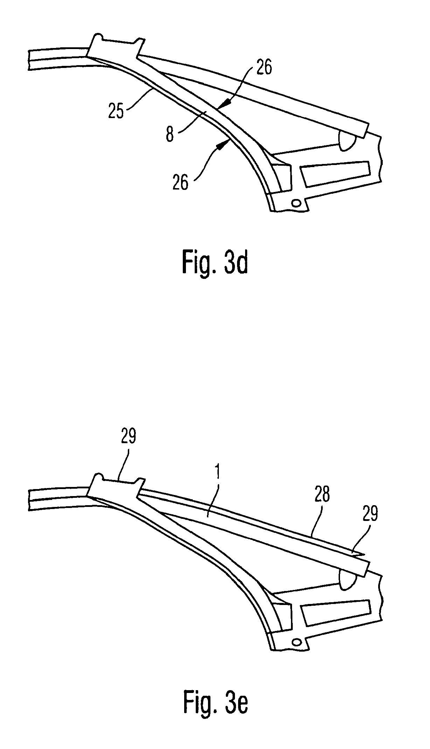

Nach Fig. 3d kann die A2-Säule 8 durch eine parallele Verstrebung 25 verstärkt sein, die durch Laserschweißpunkte 26 mit der A2-Säule verbunden ist. Schließlich ist (Fig. 3e) zumindest der frontseitige Abschnitt der Verstrebung 1 und damit der A1-Säule von einer Blende 28 bedeckt, die über Clips 29 an der Verstrebung 1 befestigt ist. Die Blende 28 kann zum Beispiel in schwarz oder in Wagenfarbe gehalten sein. Damit kann die Oberfläche des Profils der Verstrebung 1 weitgehend unbehandelt sein, sie muss insbesondere keine hochwertige Lackierung ermöglichen.

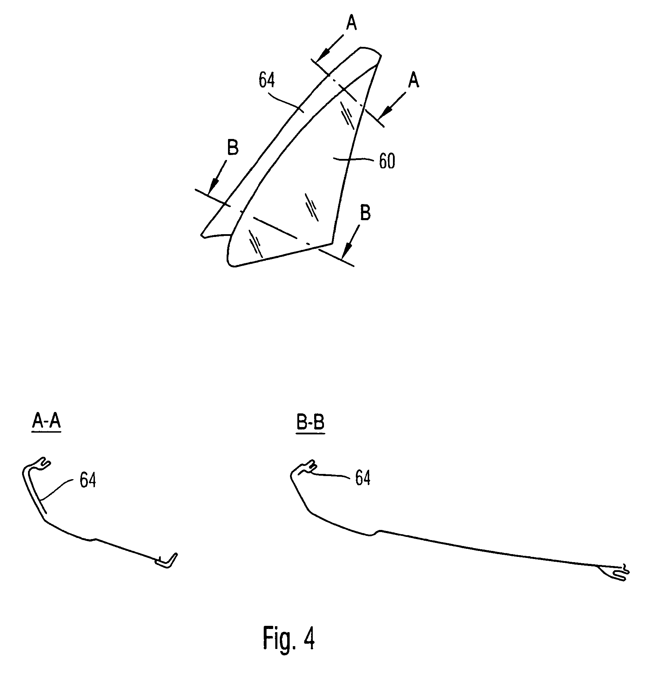

In Fig. 4 ist eine Seitenscheibe 60 in Ansicht und in Querschnitten entlang der Linien A-A bzw. B-B dargestellt, die in den dreiecksförmigen Rahmen 9 (Fig. 1) einsetzbar ist. Die Scheibe besteht aus Gewichtsersparnisgründen aus Kunststoff, bevorzugt aus Polycarbonat. Sie ist in den Rahmen 9 zum Beispiel eingeklebt oder auf sonstige Weise befestigt. Die Scheibe hat als integralen Bestandteil eine Blende 64, die bevorzugt in schwarz gehalten oder in Wagenfarbe lackiert ist.

Die Kontur der Blende 64 ist in den Querschnittsdarstellungen entlang der Linie A-A und B-B der Fig. 4 erkennbar. Seitenscheibe 60 und Blende 64 bilden eine integrale Baugruppe, die eine Doppelfunktion - nämlich Sichtfenster 60 und optisches Stilmittel - erfüllt, aber nur einen Montagegang erfordert. Mit der Blende 64 können eine von außen optisch dünn erscheinende A-Säule scheinbar verbreitert und Toleranzen in den Profilabmessungen ausgeglichen werden. Außerdem kann das Profil eine minderwertige, für eine Lackierung nicht ausreichende Oberflächenqualität aufweisen, da eine Lackierung aufgrund der Blende hier nicht erforderlich ist.

Wie im Zusammenhang mit den vorbeschriebenen Ausführungsbespielen schon erwähnt, ist die der Verstrebung 1 über Schweißverbindungen mit den übrigen Karosserieelementen, zum Beispiel der Seitenwand, verbunden. Dazu muss das Profil der Verstrebung 1 zumindest Bereiche aufweisen, die aus einem gut schweißbaren Material bestehen. Andererseits soll das Profil der Verstrebung 1 zur Realisierung eines geringen Querschnitts möglichst steif und fest sein, was einen entsprechenden Werkstoff erfordert. Diesen Anforderungen kann durch eine Gestaltung, wie in Zusammenhang mit dem Randstreifen 10 bzw. den Fügestellen 12 (Fig. 2) erläutert, genügt werden. Fertigungstechnisch besonders bevorzugt kann eine hybride - das heißt aus verschiedenen Werkstoffen bestehende - Ausgestaltung der Verstrebung 1 bzw. der A-Säule 15 vorgesehen sein.

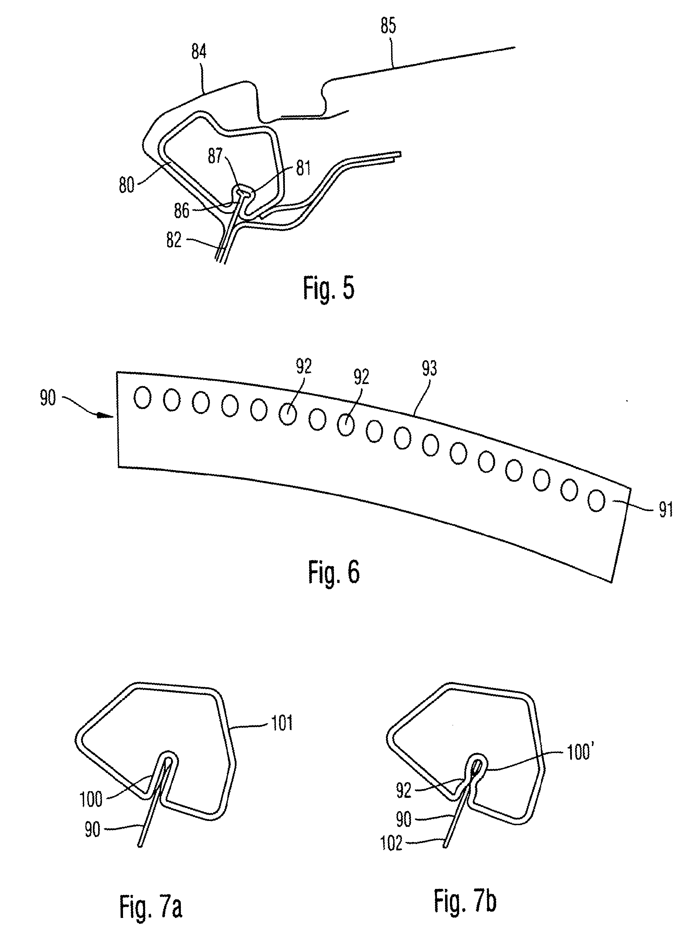

Vor diesem Hintergrund zeigt Fig. 5 ein Hohlprofil 80 für die Verstrebung 1 bzw. die A-Säule 15 aus Aluminium mit einer Aufnahme 81, in die ein Flansch 82 aus Stahl eingelegt und formschlüssig gehalten ist. Das Hohlprofil 80 (Hydrorohr) ist im montierten Zustand gezeigt, in dem es mit einer äußeren Seitenwand 84 verbunden ist. Seitlich erstreckt sich das andeutungsweise gezeigte Fahrzeugdach 85. Der Einlegeflansch 82 hat an seinem inneren Rand 86 eine - im Querschnitt der Fig. 5 - T-förmige Auswölbung 87. Beim Hydroformen schmiegt sich das Material des Profils derart um den zuvor in die Aufnahme 81 eingelegten Rand 86, dass sich eine feste formschlüssige Verbindung bildet.

Eine alternative Ausgestaltung ist aus den Fig. 6 und 7a, 7b ersichtlich. Fig. 6 zeigt einen Flansch 90 mit einer Reihe 91 von Bohrungen 92, die entlang seines oberen Randes 93 ausgebildet sind. Mit dem Rand 93 wird der Flansch 90 zunächst in eine im Wesentlichen schlitzförmige Aufnahme 100 eines Profil-Halbzeugs 101 eingebracht (Fig. 7a), bevor dieses durch Hydroformen wie vorbeschrieben bearbeitet wird. Nach dem Hydroformen nimmt die Aufnahme 100' aufgrund der druckbedingten Materialverformung die in Fig. 7b gezeigte Gestalt an und durchdringt mit ihrem Material die Bohrungen 92 des Flansches 90. Der noch hervor ragende äußere Rand 102 des Flansches dient zur Verbindung - insbesondere zum Anschweißen - der der Verstrebung 1 bzw. der A-Säule 15.

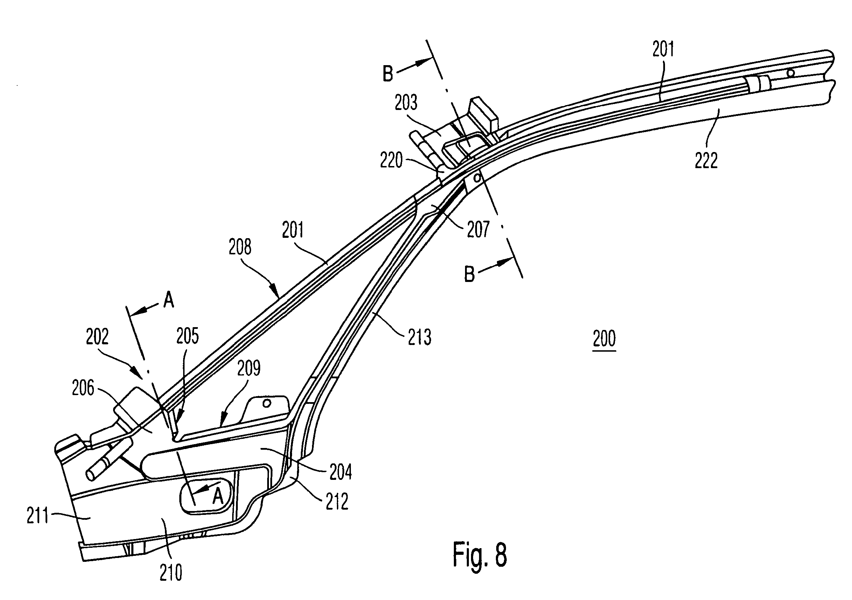

Fig. 8 zeigt einen Ausschnitt aus einer weiteren Fahrgastzelle 200 in Seitenansicht. Man erkennt die hydrogeformte Verstrebung 201, die sich im gezeigten Beispiel vom Frontbereich 202 über die A1-Säule 208, den vorderen Dachknoten 207 und den vorderen Dachrahmen 203 bis in den seitlichen Dachrahmen 222 erstreckt. Um die Verstrebung 201 mit weiteren Karosserieelementen der Fahrgastzelle 200 fertigungstechnisch einfach fügen zu können, ist die Verstrebung 201 mit drei herkömmlich gefertigten Blechen versehen, die durch an sich bekannte Fügeverfahren (zum Beispiel Schweißen, Clinchen oder Kleben) mit dem Hydroprofil der Verstrebung 201 verbunden sind.

Ein erstes Blech 205 ist in Verlängerung der Seitenwand 204 als Verbindungsblech 205 zwischen der Stirnwandstruktur 206 und einem Einbau- bzw. Klebebereich 209 des Dreieckfensters (vgl. Fig. 4) ausgebildet.

Ein weiteres, im Wesentlichen L-förmiges und relativ großes Blech 210 ist als Strukturteil 210 ausgeformt, das einerseits den hinteren Teil 211 einer Strebe für den Radlauf und andererseits ein Schließprofil 212 der A2-Säule herkömmlicher Bauweise bildet. Es dient außerdem zur Konsolidierung der A2-Säule 213.

Schließlich ist ein drittes Blech 220 vorgesehen, das als Knotenblech 220 am rückwärtigen Endbereich der A1-Säule 208 befestigt ist und somit einen integralen Teil der A1-Säule 208 bildet. Das Knotenblech 220 dient zur Verbindung der A1-Säule mit dem vorderen 203 und seitlichen Dachrahmen 222.

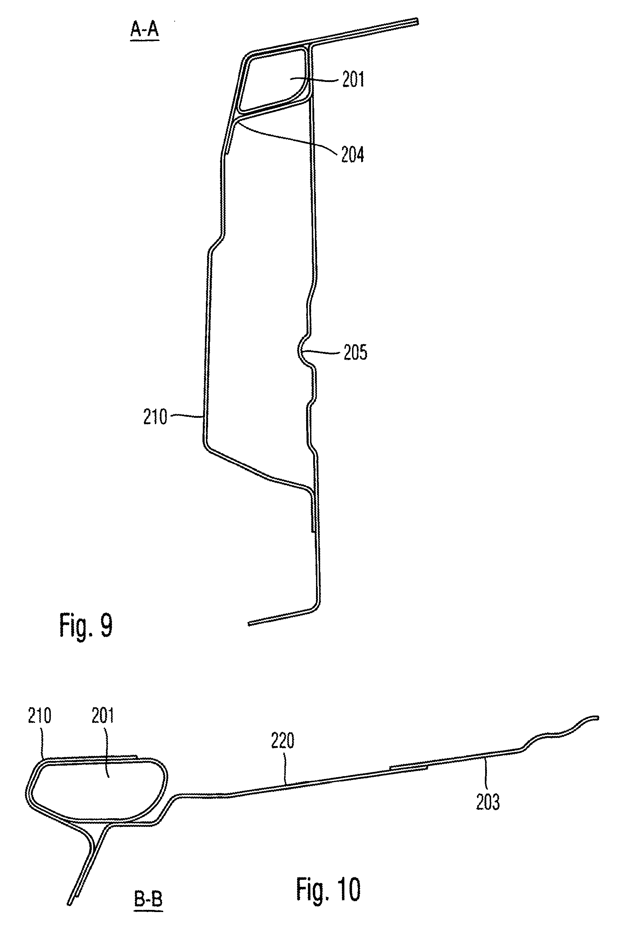

Wie die Darstellungen der in Fig. 8 angedeuteten Querschnitte A-A (Fig. 9) und B-B (Fig. 10) zeigen, ist das Verbindungsblech 205 unter flächiger Anlage zur untenliegenden bzw. inneren Wandung der Verstrebung 201 mit dieser verbunden. In Fig. 9 ist die Verlängerung 204 der Seitenwand und die Seitenteil-Stirnwand 206 erkennbar. Auf der anderen Seite verläuft das Strukturteil 210.

Der in Fig. 10 gezeigten Querschnittsdarstellung (Ebene B-B der Fig. 8) ist die Anordnung des Strukturblechs 210 und des Knotenblechs 220 im oberen, dachseitigen Bereich der Verstrebung 201 zu entnehmen. Das Knotenblech 220 erstreckt sich in Richtung vorderer Dachrahmen 203 und ist mit diesem durch Schweißung verbunden. Seitlich erkennt man das Strukturteil 210 zur Konsolidierung der A2-Säule 213. Das Strukturteil ist im vorderen und hinteren Bereich durch Schweißung jeweils an die oben bzw. außen liegende Wandung der Verstrebung 201 angebunden.

Die so gebildete Unterbaugruppe, umfassend die A-Säule und die fest damit verbundenen Bleche 205, 210 und 220, kann mittels bekannter Punktschweißung mit der übrigen Karosserie verbunden werden. Dies kann sowohl im Zuge der Montage des Frontrahmens bzw. Frontbereichs des Fahrzeugs als auch im Zuge der Seitenwandmontage (Seitenwand innen) erfolgen. Dabei kann vorteilhafterweise der vordere Bereich der äußeren Seitenwand im Dreiecksfensterbereich entfallen.

### Bezugszeichenliste

- A, B, C, D, E, F: Detaildarstellungen

- 1: Verstrebung (A/A1-Säule)
- 2: Seitenwandteil
- 3: (mittlerer) Dachknoten
- 4: frontseitiges Ende
- 5: heckseitiges Ende
- 6: Verstrebung (B-Säule)
- 7: Seitenwand
- 8: Strebe (A2-Säule)
- 9: Rahmen
- 10: Rand
- 11: Rand
- 12: Bereich
- 13: (vorderer) Dachknoten
- 14: Absatz
- 15: A-Säule
- 22: Abschnitt
- 23: Dach-Strebe
- 24: Abzweig
- 25: Verstrebung
- 26: Laserschweißpunkte
- 28: Blende
- 29: Clips
- 60: Seitenscheibe
- 64: Blende
- 80: Hohlprofil
- 81: Aufnahme
- 82: Flansch
- 84: Seitenwand
- 85: Fahrzeugdach
- 86: Rand
- 87: Auswölbung
- 90: Flansch
- 91: Reihe
- 92: Bohrungen
- 93: Rand
- 100: Aufnahme
- 100': Aufnahme
- 101: Profil-Halbzeug
- 102: äußerer Rand
- 200: Fahrgastzelle
- 201: hydrogeformte Verstrebung
- 202: Frontbereich
- 203: Dachrahmen
- 204: Seitenwand
- 205: Verbindungsblech
- 206: Stirnwandstruktur
- 207: vorderer Dachknoten
- 208: A-Säule, A1-Säule
- 209: Einbau- bzw. Klebebereich
- 210: (L-förmiges) Strukturteil
- 211: hinterer Teil
- 212: Schließprofil
- 213: A2-Säule
- 220: Knotenblech
- 222: seitlicher Dachrahmen

## Patentansprüche

1. Fahrgastzelle für Personenkraftwagen mit einer ein hydrogeformtes Profil (80) aufweisenden Verstrebung (1) für die A-Säule (15), die sich seitlich der Windschutzscheibe bis zu einem mittleren Bereich der Fahrzeugseite zwischen einem vorderen Dachknoten (13) und einem mittleren Dachknoten (3) einer B-Säule (6) erstreckt, wobei die Verstrebung (1) integrale schweißbare Verbindungselemente zur Schweißverbindung mit weiteren Karosserieteilen aufweist und das hydrogeformte Profil (80) eine Aufnahme (81) aufweist, in der ein Flansch (82) formschlüssig gehalten ist, **dadurch gekennzeichnet, dass** der Flansch (90) mehrere Öffnungen (92) aufweist, die von dem Material des hydrogeformten Profils (80) durchdrungen sind.

2. Fahrgastzelle nach Anspruch 1,
**dadurch gekennzeichnet, dass** sich die Verstrebung (1) bis zum vorderen Dachknoten (13) erstreckt.

3. Fahrgastzelle nach Anspruch 1,
**dadurch gekennzeichnet, dass** sich die Verstrebung (1) bis zum mittleren Dachknoten (3) erstreckt.

4. Fahrgastzelle nach Anspruch 1,
**dadurch gekennzeichnet, dass** sich die Verstrebung (1) bis zu einem Bereich zwischen dem vorderen Dachknoten (13) und dem mittleren Dachknoten (3) erstreckt.

5. Fahrgastzelle nach einem der vorangehenden Ansprüche 1 bis 4, **dadurch gekennzeichnet, dass** das hydrogeformte Profil (80) überlappende Randstreifen (10, 11) aufweist, wobei zumindest ein Randstreifen (11) zumindest abschnittsweise Materialausnehmungen zur Bildung von Fügestellen (12) aufweist.

6. Fahrgastzelle nach einem der vorangehenden Ansprüche 1 bis 5, **dadurch gekennzeichnet, dass** die Öffnungen (92) in einer Reihe (91) angeordnet sind.

7. Fahrgastzelle nach einem der vorangehenden Ansprüche 1 bis 6, **dadurch gekennzeichnet, dass** die Verstrebung (201) ein Verbindungsblech (205) aufweist, das einen inneren Abschnitt der Fahrgastzellenseitenwand (204) bildet und mit einer äußeren Seitenwand der Fahrgastzelle verbunden ist.

8. Fahrgastzelle nach einem der vorangehenden Ansprüche 1 bis 7, **dadurch gekennzeichnet, dass** die Verstrebung (201) mit einem im Wesentlichen L-förmigen Strukturteil (210) verbunden ist, das mit einer frontseitigen Radeinbaustrebe verbunden ist und als integralen Abschnitt einen hinteren Teil der Radeinbaustrebe (211) aufweist.

9. Fahrgastzelle nach Anspruch 8, **dadurch gekennzeichnet, dass** das L-förmige Strukturteil (210) ein Schließprofil (212) der Verstrebung (201) aufweist.

10. Fahrgastzelle nach einem der vorangehenden Ansprüche 1 bis 9, **dadurch gekennzeichnet, dass** die Verstrebung (201) zur Verbindung mit einem Dachrahmen (203, 222) ein Knotenblech (220) aufweist.

11. Fahrgastzelle nach einem der vorangehenden Ansprüche 1 bis 10, **dadurch gekennzeichnet, dass** das frontseitige Ende (4) der Verstrebung (1) abgeschrägt ist und/oder das dachknotenseitige Ende (5) der Verstrebung (1) eine Ausnehmung aufweist.

12. Fahrgastzelle nach einem der vorangehenden Ansprüche 1 bis 11, **dadurch gekennzeichnet, dass** die Verstrebung (1) mit einer äußeren Blende (28) versehen ist.

13. Fahrgastzelle nach einem der vorangehenden Ansprüche 1 bis 12, **dadurch gekennzeichnet, dass** von der Verstrebung (1) ein sich frontseitig erstreckender Seitenholm (8) abzweigt, der einen im Wesentlichen dreiecksförmigen Rahmen (9) für eine Seitenscheibe begrenzt.

14. Fahrgastzelle nach Anspruch 13, **dadurch gekennzeichnet, dass** das frontseitige Ende (4) der Verstrebung (1) mit dem frontseitigen Ende des Seitenholms (8) über ein angeschweißtes Seitenwandteil (2) verbunden ist.

15. Fahrgastzelle nach einem der Ansprüche 13 oder 14, **dadurch gekennzeichnet, dass** die Seitenscheibe (60) eine Blende (64) zur äußeren Verblendung der Verstrebung (1) aufweist.

## Claims

1. Passenger compartment for motor cars with a cross beam (1) having a hydroformed profile (80) for the A-pillar (15) which extends along the sides of the windscreen up to a middle section of the vehicle side between a front roof node (13) and a middle roof node (3) of a B-pillar (6), whereby the cross beam (1) has integral weldable connecting elements to connect (weld) further body components, and the hydroformed profile (80) has a retainer (81) in which a flange (82) is retained with positive locking, **characterized in that** the flange (90) has several openings (92) which are permeated by the material of the hydroformed profile (80).

2. Passenger compartment according to claim 1, **characterized in that** the cross beam (1) extends up to the front roof node (13).

3. Passenger compartment according to claim 1, **characterized in that** the cross beam (1) extends up to the middle roof node (3).

4. Passenger compartment according to claim 1, **characterized in that** the cross beam (1) extends up to a section between the front roof node (13) and the middle roof node (3).

5. Passenger compartment according to one of the previous claims 1 to 4, **characterized in that** the hydroformed profile (80) has overlapping edge trims (10, 11), whereby at least one edge trim (11) has material recesses at least in some sections to build joint patches (12).

6. Passenger compartment according to one of the previous claims 1 to 5, **characterized in that** the openings (92) are arranged in a row (91).

7. Passenger compartment according to one of the previous claims 1 to 6, **characterized in that** the cross beam (201) has a connecting sheet (205) which forms an inner section of the passenger compartment's side section (204) and which is connected to an outer side section of the passenger compartment.

8. Passenger compartment according to one of the previous claims 1 to 7, **characterized in that** the cross beam (201) is connected to a widely L-shaped structural part (210), which is connected to a front-side wheel mounting bar and which has a back part of the wheel mounting bar (211) as integral section.

9. Passenger compartment according to claim 8, **characterized in that** the L-shaped structural part (210) has a lock profile (212) of the cross beam (201).

10. Passenger compartment according to one of the previous claims 1 to 9, **characterized in that** the cross beam (201) has a junction plate (220) for the connection with a roof rail (203, 222).

11. Passenger compartment according to one of the previous claims 1 to 10, **characterized in that** the front end (4) of the cross beam (1) is chamfered, and/or the cross beam's (1) end at the roof node side (5) has a recess.

12. Passenger compartment according to one of the previous claims 1 to 11, **characterized in that** the cross beam (1) is provided with an outer screen (28).

13. Passenger compartment according to one of the previous claims 1 to 12, **characterized in that** a side beam (8), which extends to the front side and widely limits a triangular frame (9) for one side window, diverts from the cross beam (1).

14. Passenger compartment according to claim 13, **characterized in that** the front side end (4) of the cross beam (1) is connected with the front side end of the side beam (8) via a welded side section panel (2).

15. Passenger compartment according to one of the claims 13 or 14, **characterized in that** the side window (60) has a sheet (64) to screen the cross beam (1) on the outer side.

## Revendications

1. Compartiment passage pour voitures à moteur avec poutre croisée (1) possédant un profil hydroformé (80) pour la colonne A (15) qui s'étend sur le long du pare-brise jusqu'à une section médiane des côtés du véhicule entre un nodule de la toiture avant (13) et d'un nodule de la toiture milieu (3) d'une colonne B (6), où la poutre croisé (1) possède tous les équipements soudables permettant de connecter les futurs éléments (soudés) du corps de l'engin, et où le profil hydroformé (80) possède un récepteur (81) dans lequel le protecteur (82) est retenu par un système de fermeture positif, **caractérisé par le fait que** le protecteur (90) possède plusieurs ouvertures (92) infiltrées par le matériel du profil hydroformé (80).

2. Compartiment passager, en fonction de la revendication 1, **caractérisé par le fait que** la poutre croisée (1) s'étend jusqu'au nodule de la toiture avant (13).

3. Compartiment passager, en fonction de la revendication 1, **caractérisé par le fait que** la poutre croisée (1) s'étend jusqu'au nodule de la toiture milieu (3).

4. Compartiment passager, en fonction de la revendication 1, **caractérisé par le fait que** la poutre croisée (1) s'étend jusqu'à une section située entre le nodule de la toiture avant (13) et le nodule de la toiture milieu (3).

5. Compartiment passager, en fonction d'un des revendications précédentes 1 à 4, **caractérisé par le fait que** le profil hydroformé (80) possède des protections angulaires (10, 11), dont au moins une (11) est liée à au moins certaines sections des joints intégrés (12).

6. Compartiment passager, en fonction d'une des revendications précédentes 1 à 5, **caractérisé par le fait que** les ouvertures (92) sont alignées (91).

7. Compartiment passager, en fonction d'une des revendications précédentes 1 à 6, **caractérisé par le fait que** la poutre croisée (201) possède un élément de connexion (205) qui forme une section intérieure du côté passager du compartiment (204) et qui est connectée au côté extérieur du compartiment passager.

8. Compartiment passager, en fonction d'une des revendications précédentes 1 à 7, **caractérisé par le fait que** la poutre croisée (201) est connectée à une pièce structurelle en L (210), elle-même connectée à une barre de montage de la roue avant et qui partage la partie arrière de la barre de montage de roue (211) comme section intégrale.

9. Compartiment passager, en fonction de la revendication 8, **caractérisé par le fait que** la pièce structurelle en L (210) possède un profil de fermeture (212) de la poutre croisée (201).

10. Compartiment passager, en fonction d'une des revendications précédentes 1 à 9, **caractérisé par le fait que** la poutre croisée (201) possède un plateau de jonction (220) pour connexion avec une galerie de toit (203, 222).

11. Compartiment passager, en fonction d'une des revendications précédentes 1 à 10, **caractérisé par le fait que** la fermeture avant (4) de la poutre croisée (1) est cannelée et/ou que l'extrémité de la poutre croisée (1) à la fin du côté supérieur (5) possède un renfoncement.

12. Compartiment passager, en fonction d'une des revendications précédentes 1 à 11, **caractérisé par le fait que** la poutre croisée (1) est fournie avec un écran extérieur (28).

13. Compartiment passager, en fonction d'une des revendications précédentes 1 à 12, **caractérisé par** le fait la barre extérieure (8), qui s'étend sur le côté avant et délimite largement un cadre triangulaire (9) pour une des fenêtres latérales, est dissociée de la poutre croisée (1).

14. Compartiment passager, en fonction de la revendication 13, **caractérisé par le fait que** l'extrémité du côté avant (4) de la poutre croisée (1) connectée avec l'extrémité du rayon latéral (8) via un panneau soudé (2).

15. Compartiment passager, en fonction d'une des revendications 13 ou 14, **caractérisé par le fait que** la fenêtre latérale (60) possède une plaque(64) permettant de faire écran sur la poutre croisée (1) sur son côté extérieur.
